Europäisches Patentamt

European Patent Office

Office européen des brevets

(11) Veröffentlichungsnummer: **0 475 087 A1**

## EUROPÄISCHE PATENTANMELDUNG

(21) Anmeldenummer: **91113447.6**

(22) Anmeldetag: **10.08.91**

(51) Int. Cl.5: **C08G 69/28**, C08L 77/06

(30) Priorität: **21.08.90 DE 4026404**

(43) Veröffentlichungstag der Anmeldung:
**18.03.92 Patentblatt 92/12**

(84) Benannte Vertragsstaaten:
**CH DE ES FR GB LI NL**

(71) Anmelder: **BASF Aktiengesellschaft**
**Carl-Bosch-Strasse 38**
**W-6700 Ludwigshafen(DE)**

(72) Erfinder: **Pipper, Gunter**
**Schlangenthaler Weg 10**
**W-6702 Bad Duerkheim(DE)**
Erfinder: **Goetz, Walter, Dr.**
**Dhauner Strasse 79**
**W-6700 Ludwigshafen(DE)**

(54) **Verfahren zur Herstellung von verstärktem Polytetramethylenadipamid.**

(57) Verfahren zur Herstellung von Polyamid-4.6, das mit Verstärkungsmitteln gefüllt ist, durch Vermischen von Verstärkungsmitteln mit Polyamid-4.6 in der Schmelze, dadurch gekennzeichnet, daß man

a) ein Salz aus 1,4-Diaminobutan und Adipinsäure unter Mitverwendung von überschüssigem 1,4-Diaminobutan und Wasser bei polyamidbildenden Temperaturen unter erhöhtem Druck bis zu einem Vorkondensat mit einer relativen Viskosität ≤ 1,60 polykondensiert,

b) das Vorkondensat aus (a) in fester Phase unter Mitverwendung von Wasserdampf bei einer Temperatur von 220 bis 270°C polykondensiert und ein Polyamid-4.6 mit einer relativen Viskosität von 2,0 bis 2,6 erhält,

c) Verstärkungsmittel in Polyamid-4.6 aus der Stufe b) in der Schmelze einarbeitet und ein mit Verstärkungsmitteln gefülltes Polyamid-4.6 erhält,

d) das mit Verstärkungsmitteln gefüllte Polyamid-4.6 in fester Phase unter Mitverwendung von Wasserdampf bei einer Temperatur von 220 bis 270°C bis zu einer relativen Viskosität von mindestens 3,2 polykondensiert.

EP 0 475 087 A1

Rank Xerox (UK) Business Services

Polyamid-4.6 ist wegen seines hohen Schmelzpunktes ein Werkstoff, der größeres Interesse erlangt hat. Aus der EP-B-38 094 ist bekannt, daß man Polyamid-4.6 erhält, wenn man ein Salz aus Adipinsäure und 1,4-Diaminobutan in wäßriger Lösung unter Mitverwendung von überschüssigem 1,4-Diaminobutan kondensiert und einen Gehalt an cyclischen Endgruppen von kleiner 0,2 mg Äquivalent je Gramm einhält und anschließend das so erhaltene Vorpolymerisat in fester Phase in einer Wasserdampf enthaltenden Atmosphäre nachkondensiert. Dort wird auch bereits beschrieben, daß man übliche Additive wie Pigmente oder Mattierungsmittel bereits dem Vorpolymerisat zufügt und anschließend die Nachkondensation durchführt. Das Verfahren gibt keinen Hinweis, wie Polyamid-4.6 mit einem höheren Gehalt an Verstärkungsmitteln herzustellen ist, zumal gewöhnliche Additive wie Pigmente oder Mattierungsmittel in Mengen unter 1 Gew.-% zugegeben werden.

Aus der JP-OS 62-185746 sind auch schon Massen aus Polyamid-4.6 bekannt, die mit Glasfasern einer Länge von größer 0,5 mm, insbesondere 2 bis 10 mm und den üblichen Verstärkungsmitteln wie Talk oder Kaliumtitanat gefüllt sind.

Es hat sich nun herausgestellt, daß das Einbringen von größeren Mengen an Füllmitteln, insbesondere von Glasfasern in die Schmelze des Vorpolymerisats Schwierigkeiten hinsichtlich einer gleichmäßigen Verteilung bereitet, während das Einbringen von Füllstoffen in Polyamid-4.6 mit der vorgesehenen Endviskosität zu einem starken Abbau des Polymeren und zu niedrigen Faserlängen im Falle der Verstärkung mit Glas- oder Kohlenstoff-Fasern, was die mechanischen Eigenschaften beeinträchtigt, und zudem zu Verfärbungen führt.

Es war deshalb die technische Aufgabe gestellt, ein Verfahren zur Herstellung von Polyamid-4.6, das mit Verstärkungsmitteln gefüllt ist, zur Verfügung zu stellen, bei dem das Verstärkungsmittel gleichmäßig in der Polymermatrix verteilt ist, eine Verminderung der mechanischen Eigenschaften durch starken Abbau vermieden wird und insbesondere, bei Zusatz von Glasfasern oder Kohlenstoff-Fasern als Verstärkungsmittel, eine optimale Faserlänge erzielt wird.

Diese Aufgabe wird gelöst in einem Verfahren zur Herstellung von Polyamid-4.6, das mit Verstärkungsmitteln gefüllt ist, durch Vermischen von Verstärkungsmitteln mit Polyamid-4.6 in der Schmelze, wobei man

a) ein Salz aus 1,4-Diaminobutan und Adipinsäure unter Mitverwendung von überschüssigem 1,4-Diaminobutan und Wasser bei polyamidbildenden Temperaturen unter erhöhtem Druck bis zu einem Vorkondensat mit einer relativen Viskosität ≦ 1,60 polykondensiert,

b) das Vorkondensat aus (a) in fester Phase unter Mitverwendung von Wasserdampf bei einer Temperatur von 220 bis 270°C polykondensiert und ein Polyamid-4.6 mit einer relativen Viskosität von 2,0 bis 2,6 erhält,

c) Verstärkungsmittel in Polyamid-4.6 aus der Stufe b) in der Schmelze einarbeitet und ein mit Verstärkungsmitteln gefülltes Polyamid-4.6 erhält,

d) das mit Verstärkungsmitteln gefüllte Polyamid-4.6 aus der Stufe c) in fester Phase unter Mitverwendung von Wasserdampf bei einer Temperatur von 220 bis 270°C bis zu einer relativen Viskosität von mindestens 3,2 polykondensiert.

Das neue Verfahren hat den Vorteil, daß man Polyamid-4.6, das mit Verstärkungsmitteln gefüllt ist, von gleichbleibend hoher mechanischer Qualität erhält und zudem Verfärbungen minimiert werden. Ferner hat das neue Verfahren den Vorteil, daß sich auch große Mengen an Verstärkungsmitteln problemlos in Polyamid-4.6 verteilen lassen und darüber hinaus auch Zusätze von Glasfasern in der optimalen Länge verteilt werden.

In der Stufe a) wird ein Salz aus 1,4-Diaminobutan und Adipinsäure unter Mitverwendung von überschüssigem 1,4-Diaminobutan und Wasser bei polyamidbildenden Temperaturen unter erhöhtem Druck zu einem Vorkondensat mit einer relativen Viskosität ≦ 1,60 polykondensiert.

Vorteilhaft geht man von einer wäßrigen Salzlösung von 1,4-Diaminobutan und Adipinsäure aus. Durch die Menge an überschüssigem 1,4-Diaminobutan hat die verwendete Lösung vorteilhaft einen pH-Wert von 7,8 bis 7,9 (bei 20°C). Geeignete Lösungen haben z.B. einen Gehalt von 40 bis 65 Gew.-% des genannten Salzes.

Die Polykondensation erfolgt vorteilhaft bei einer Temperatur von 180 bis 330°C unter erhöhtem Druck, z.B. bis zu 100 bar, insbesondere bis zu 40 bar. Vorteilhaft entfernt man während der Herstellung des Vorkondensats den größten Teil des Wassers und erhält ein Vorkondensat mit einer relativen Viskosität ≦ 1,60, insbesondere von 1,4 bis 1,60.

Besonders bewährt hat sich ein Verfahren zur Herstellung des Vorkondensats, bei dem man in einer ersten Stufe die wäßrige Salzlösung kontinuierlich in eine Verdampferzone leitet. Dort wird die wäßrige Salzlösung unter gleichzeitiger Verdampfung von Wasser und Bildung eines Präpolymeren unter einem Überdruck von 1 bis 10 bar auf eine Temperatur von 270 bis 330°C erhitzt. Vorteilhaft wendet man einen Überdruck von 7 bis 9 bar an und erhitzt auf eine Temperatur von 300 bis 310°C. Hierbei hält man eine Verweilzeit von höchstens 120 Sekunden, insbesondere von 70 bis 100 Sekunden ein. Man erhält ein Gemisch aus einer Dampfphase und geschmolzenem Präpolymeren. Vorteilhaft hat das Präpolymere einen Umsetzungsgrad ≧ 90 %, insbesondere von 94 bis 96 %.

Die Verdampferzone ist vorteilhaft rohrförmig, insbesondere als Röhrenbündel ausgebildet. Eine vorteilhafte Ausführungsform der Verdampferzone ist die Verwendung von Röhren oder Röhrenbündeln, bei denen die einzelnen Röhren mit Einbauten versehen sind, um eine große Oberfläche zu schaffen. Dies wird beispielsweise erreicht durch Bestücken mit Füllkörpern wie Raschigringen, Metallringen oder insbesondere Füllkörpern aus Drahtnetz.

Das Präpolymere und die Dampfphase, die im wesentlichen aus Wasserdampf und geringen Mengen an 1,4-Diaminobutan und Pyrrolidin besteht, wird unter Durchmischung innerhalb einer Verweilzeit von 70 bis 120 Sekunden durch eine unmittelbar an die erste Stufe anschließende Stoffaustauschzone, die mit Einbauten versehen ist, unter einem Druck von 1 bis 10 bar und einer Temperatur von 270 bis 330°C geleitet und ein geschmolzenes Polymeres und eine Dampfphase erhalten. Zweckmäßig ist die Stoffaustauschzone, wie die Verdampferzone als Röhrenbündel ausgebildet. Durch Einbauten wie Füllkörper, wird eine große Oberfläche, z.B. von 0,5 bis 2 m$^2$/l erzeugt. Hierdurch werden die Phasen, d.h. Präpolymeres und Dampf, innig in Berührung gebracht.

Das aus der Stoffaustauschzone austretende zweiphasige Gemisch aus Dampf und Polymerisat wird in einer Trennzone getrennt. Die Trennung erfolgt in der Regel von selbst aufgrund der physikalischen Unterschiede, wobei sich im unteren Teil der Trennzone das Polymerisat ansammelt und als granulierfähiges Polymerisat ausgetragen wird. Die freiwerdenden Brüden werden ebenfalls ausgetragen und bestehen im wesentlichen aus Wasserdampf und geringen Mengen an Pyrrolidin.

Die Verweilzeit des schmelzflüssigen Polymeren in der Trennzone beträgt vorteilhaft weniger als 60 Sekunden, insbesondere 30 bis 45 Sekunden. Es ist sehr vorteilhaft, wenn in den Stufen 1 bis 3 die Gesamtverweilzeit des Polymeren im schmelzflüssigen Zustand weniger als 5 Minuten, z.B. 2,5 bis 4 Minuten beträgt. Das erhaltene Polymere hat in der Regel einen Aminoendgruppengehalt von 150 bis 400, insbesondere 115 bis 300 mÄ/kg und eine relative Viskosität von 1,40 bis 1,55.

Die in der Trennzone anfallende Dampfphase wird durch Destillation getrennt, Pyrrolidin abgetrennt und 1,4-Diaminobutan in die Stufe a) zurückgeführt.

In der Stufe b) wird das Vorkondensat aus der Stufe a) in fester Phase unter Mitverwendung von Wasserdampf bei einer Temperatur von 220 bis 270°C polykondensiert und ein Polyamid-4.6 mit einer relativen Viskosität von 2,0 bis 2,6 erhalten.

Für die Kondensation in fester Phase verwendet man vorteilhaft überhitzten Wasserdampf. Zweckmäßig führt man die Festphasenkondensation so durch, daß man das Vorkondensat aus Polyamid-4.6 von oben nach unten durch eine Zone leitet und überhitzten Wasserdampf von unten nach oben führt. In der Regel bedarf es 4 bis 5 Stunden, um eine relative Viskosität von 2,0 bis 2,6 zu erreichen.

In der Stufe c) werden Verstärkungsmittel in das Polyamid-4.6 mit einer relativen Viskosität von 2,0 bis 2,6 aus der Stufe b) in schmelzflüssigem Zustand eingearbeitet. In der Regel wendet man Verstärkungsmittel in Mengen von 10 bis 60 Gew.-%, insbesondere 20 bis 40 Gew.-%, bezogen auf die Summe aus Verstärkungsmittel und Polyamid-4.6 an.

Geeignete Verstärkungsmittel sind beispielsweise Glasfasern, Kohlenstoff-Fasern, Kaliumtitanat-Whiskers, Wollastonit, Glaskugeln, Kaolin, Calciumcarbonat, Talkum oder Glimmer. Vorteilhaft verwendet man Kaolin, Wollastonit oder Glasfasern. Sofern man Glasfasern verwendet, bevorzugt man solche, die mit Aminosilan vorbehandelt sind, und einem Durchmesser von 5 bis 20 μm, insbesondere 8 bis 15 μm aufweisen. Die Glasfasern werden in Form von Roving oder Schnittfasern angewandt. Nach dem Einarbeiten, soll die Faserlänge im verstärkten Polyamid 100 bis 500 μm, insbesondere 180 bis 350 μm betragen und der Anteil an Fasern über 800 μm vorteilhaft unter einem Gewichtsprozent liegen.

Pulverförmige Verstärkungsmittel oder Schnittfasern können mit festem Polyamid-4.6 gemischt und dann in einem Extruder unter Aufschmelzen des Polyamids gemischt, in Stränge extrudiert abgekühlt und granuliert werden. Vorteilhafter ist es, Polyamid-4.6 zunächst im Extruder aufzuschmelzen und dann durch eine Zuführöffnung Fasern oder pulverförmige Füllstoffe zudosieren. Die Fasern werden während des Mischvorgangs im Extruder zerkleinert. Vorteilhaft hält man ein arithmetisches Mittel der Faserlängenverteilung von größer als 250 μm, insbesondere größer als 300 μm, und gleichzeitig einen Anteil an Fasern über 800 μm von kleiner 1 % ein. Besonders bevorzugt sind Glasfasern.

Das Einarbeiten von Verstärkungsmitteln erfolgt zweckmäßig in Extrudern, insbesondere Zweiwellenextrudern. Diese sind zweckmäßig mit 1 bis 4 Knetblöcken mit jeweils nachgeschalteten Stauelementen, insbesondere Linksgewinde ausgerüstet.

Zusätzlich zu den Verstärkungsmitteln ist es möglich, weitere Zusätze wie Flammschutzmittel, z.B. roter Phosphor, Phosphorverbindungen oder Antimontrioxid oder Stabilisatoren in wirksamen Mengen zuzusetzen.

In der Stufe d) wird das mit Verstärkungsmitteln gefüllte Polyamid-4.6 aus der Stufe c) in fester Phase unter Mitverwendung von Wasserdampf bei einer Temperatur von 220 bis 270°C bis zu einer relativen Viskosität von mindestens 3,2 polykondensiert. Vorteilhaft führt man die Polykondensation bis zu einer relativen Viskosität von 3,4 bis 4,0 zu. In der Regel wird die Polykondensation mit überhitztem Wasserdampf durchgeführt und bedarf im allgemeinen 7 bis 10 Stunden.

Das nach dem Verfahren der Erfindung erhältliche Polyamid-4.6, das mit Verstärkungsmitteln gefüllt ist, eignet sich vorteilhaft zur Herstellung von Formteilen durch Spritzgießen oder Extrusion.

Das Verfahren nach der Erfindung sei an folgenden Beispielen veranschaulicht.

Beispiel 1

Aus äquimolaren Mengen 1,4-Diaminobutan und Adipinsäure wird bei 94°C eine 60 gew.-%ige wäßrige Salzlösung mit einem pH-Wert von 7,8 hergestellt und diese mit einer Geschwindigkeit entsprechend einer Polyamidmenge von 5 kg je Stunde mittels einer Dosierpumpe in ein vertikales 3 m langes Verdampferrohr dosiert. Der Verdampfer hat einen Inhalt von 180 ml und besteht aus periodisch alternierend zylindrischen und spaltförmigen Abschnitten. Der Wärmertauscherfläche beträgt ca. 1400 cm$^2$. Das Rohr wird mit einem flüssigen Wärmeträger als Heizmedium mit hoher Umwälzung beheizt.

Die Verweilzeit im Verdampfer beträgt ca. 100 sec, die Temperatur 308°C und der Druck 8,0 bar. Das aus dem Verdampfer austretende Gemisch aus geschmolzenem Präpolymer und Dampf hat eine Temperatur von 305°C und wird unmittelbar in eine Stoffaustauschzone geleitet, die mit Füllkörpern bestückt ist und eine Oberfläche von 1 m$^2$/l hat. In der Stoffaustauschzone hält man die gleiche Temperatur und den gleichen Druck wie im Verdampfer ein.

Hierbei erfolgt ein inniger Austausch zwischen aminhaltiger Gasphase und kondensierendem Präpolymeren. Die Verweilzeit in dieser Zone beträgt ca. 95 sec. Man erhält als Austrag ein Gemisch aus geschmolzenem Polymerisat und Dampf, das in einem Abscheidegefäß in eine Dampfphase und Polymerisatphase getrennt wird. Letztere wird sofort ausgetragen. Die Verweilzeit des Polymerisats im schmelzflüssigen Zustand im Abscheidegefäß beträgt ca. 45 sec. Die Gesamtverweilzeit in schmelzflüssigem Zustand in der Verdampferzone, Stoffaustauschzone und im Trenngefäß beträgt ca. 4 min.

Das Vorkondensat hat eine relative Viskosität von 1,55 (Komponente A1), einen Aminoendgruppengehalt von 290 Mol.-Äq. je kg und einen Gehalt an Carboxylendgruppen von 122 mäq je kg. Der Gehalt an Pyrolidinendgruppen beträgt 0,1 mmol pro g Polymerisat. Das erhaltene Polymerisat ist weiß.

Die anfallenden Brüden bestehen aus Wasserdampf 0,9 Gew.-% Pyrrolidin und ca. 8,0 Gew.-% 1,4-Diaminobutan und werden mit einer Temperatur von 303°C und 8 bar in eine Kolonne mit 10 theoretischen Böden geleitet und aufgetrennt. Im Kopf der Kolonne werden ca. 900 ml pro Stunde Wasser zur Verstärkung des Trenneffekts aufgegeben. Im Kopf der Kolonne wird eine Temperatur von 175°C eingehalten. Die kondensierten Brüden haben einen Gehalt von 0,85 Gew.-% Pyrolidin und < 0,05 Gew.-% 1,4-Diaminobutan. Im Sumpf der Kolonne erhält man eine wäßrige Lösung von 1,4-Diaminobutan, die mit 170 g pro Stunde einer 50 gew.-%igen wäßrigen 1,4-Diaminobutan-Lösung ergänzt und dem Verdampfer zugeführt wird.

Nachkondensation I

Das erhaltene granulierte Vorkondensat wird im Gegenstrom mit überhitztem Wasserdampf bei einer Temperatur von 260°C und einer Verweilzeit von 5 Stunden in fester Phase kondensiert. Man erhält ein weißes Polymerisat mit einer relativen Viskosität von 2,38 (Komponente A2).

Einarbeiten von Verstärkungsmittel

In dieses Polymere wurden mit einem Zweiwellenextruder (ZSK 30 der Fa. Werner & Pfleiderer, 4 Knetblöcke mit jeweils nachgeschaltetem Stauelement (Linksgewinde) im Verfahrensteil, 250 U/min, 25 kg/h, 330") Glasfasern (30 Gew.-% OCFR23DXI ®, Schnittfaser 4,5 mm Länge, 10 μm Durchmesser, Aminosilan-Schichte) eingearbeitet. Das Gemisch wurde verstrangt, abgekühlt und granuliert (Komponente A3).

Nachkondensation II

Das so erhaltene Polyamid-4.6 mit einem Gehalt an Glasfasern wurde mit Wasserdampf (260°C, 9 h) auf eine relative Viskosität von 3,48 getempert (Komponente A4). Das Produkt wurde zu Prüfkörpern spritzgegossen und geprüft. Die erzielten Ergebnisse sind aus der nachfolgenden Tabelle ersichtlich.

Vergleichsbeispiele 1 bis 3

1. Komponente A1 wurde mit Wasserdampf (260°C, 14 h) direkt auf relative Viskosität 3,54 getempert. In dieses Polymere wurden wie in A Glasfasern eingearbeitet, das Produkt wurde verspritzt und geprüft.
2. Komponente A3 wurde ohne weiteres Tempern verspritzt und geprüft.
3. Komponente A1 wurde mit Glasfasern zu konfektionieren versucht.
   Die Ergebnisse sind in nachfolgender Tabelle aufgeführt.
   Der Glasfasergehalt betrug in allen Beispielen 30 Gew.-%.

## Tabelle

| | Beispiel 1 | Vergl.-Bsp. 1 | Vergl.-Bsp. 2 | Vergl.-Bsp. 3 |
|---|---|---|---|---|
| Fasergehalt (Ist) Gew.-% | 29,8 | 29,2 | 29,8 | ---*) |
| Faserlänge µm | 338 | 245 | 338 | >480 |
| arith. Mittelwert | | | | |
| rel. Viskosität | | | | |
| vor Konfektionierung | 2,38 | 3,54 | 2,38 | 1,55 |
| Granulat | 2,14 | 2,62 | 2,14 | ---- |
| nach Tempern | 3,48 | ---- | ---- | ---- |
| E-Modul (MPa, DIN 53 457) | 10524 | 9610 | 9924 | ---- |
| Zugfest. (MPa, DIN 53 455) | 180,7 | 170,8 | 151,7 | ---- |
| Schlagzähigkeit an | | | | |
| kJ/m², DIN 53 453 | 42 | 33 | 19 | ---- |
| IZOD kJ/m², ASTM | 18 | 14 | 9 | ---- |
| Schädigungsarbeit ws,Durch- | | | | |
| stoßversuch J/m, DIN 53 443 | 3,4 | 2,4 | 0,5 | ---- |

*) Durch starke Faserüberlängen (>1000 µm) war das Material nicht verstrangbar, es kam zu Strangabrissen nach ca. 10 Sekunden. Deshalb konnten keine mechanischen Eigenschaften bestimmt werden. Die Faserlänge ist ein unterer Grenzwert, da einzelne Fasern länger waren als der Durchmesser des Bildfeldes des Meßgerätes und deshalb nicht gemessen werden konnten.

## Patentansprüche

1. Verfahren zur Herstellung von Polyamid-4.6, das mit Verstärkungsmitteln gefüllt ist, durch Vermischen von Verstärkungsmitteln mit Polyamid-4.6 in der Schmelze, dadurch gekennzeichnet, daß man

   a) ein Salz aus 1,4-Diaminobutan und Adipinsäure unter Mitverwendung von überschüssigem 1,4-Diaminobutan und Wasser bei polyamidbildenden Temperaturen unter erhöhtem Druck zu einem Vorkondensat mit einer relativen Viskosität ≤ 1,60 polykondensiert,

   b) das Vorkondensat aus (a) in fester Phase unter Mitverwendung von Wasserdampf bei einer Temperatur von 220 bis 270°C polykondensiert und ein Polyamid-4.6 mit einer relativen Viskosität von 2,0 bis 2,6 erhält,

   c) Verstärkungsmittel in Polyamid-4.6 aus der Stufe b) in der Schmelze einarbeitet und ein mit Verstärkungsmitteln gefülltes Polyamid-4.6 erhält,

   d) das mit Verstärkungsmitteln gefüllte Polyamid-4.6 in fester Phase unter Mitverwendung von Wasserdampf bei einer Temperatur von 220 bis 270°C bis zu einer relativen Viskosität von mindestens 3,2 polykondensiert.

2. Verfahren nach Anspruch 1, dadurch gekennzeichnet, daß man die Polykondensation in Stufe a) bei einer Temperatur von 270 bis 330°C unter einem Druck von 1 bis 10 bar unter Bildung einer Dampfphase in weniger als 5 Minuten durchführt.

3. Verfahren nach den Ansprüchen 1 und 2, dadurch gekennzeichnet, daß man in den Stufen b) und d) überhitzten Wasserdampf verwendet.

4. Verfahren anch den Ansprüchen 1 bis 3, dadurch gekennzeichnet, daß man in der Stufe c) Glasfasern als Verstärkungsmittel verwendet.

5. Verfahren nach den Ansprüchen 1 bis 4, dadurch gekennzeichnet, daß man ein arithmetisches Mittel der Glasfaserlängenverteilung größer als 250 $\mu$m und gleichzeitig einen Anteil an Fasern über 800 $\mu$m kleiner als 1 % einhält.

6. Verfahren nach den Ansprüchen 1 bis 5, dadurch gekennzeichnet, daß man ein arithmetisches Mittel der Glasfaserlängenverteilung größer als 300 $\mu$m und gleichzeitig einen Anteil an Fasern über 800 $\mu$m kleiner als 1 % einhält.

| | **EINSCHLÄGIGE DOKUMENTE** | | EP 91113447.6 |
|---|---|---|---|

| Kategorie | Kennzeichnung des Dokuments mit Angabe, soweit erforderlich, der maßgeblichen Teile | Betrifft Anspruch | KLASSIFIKATION DER ANMELDUNG (Int CI⁵) |
|---|---|---|---|
| A | US - A - 4 460 762<br>(GAYMANS et al.)<br>  * Ansprüche; Beispiele *<br>-- | 1-3 | C 08 G 69/28<br>C 08 L 77/06 |
| A | PATENT ABSTRACTS OF JAPAN,<br>unexamined applications,<br>C field, Band 11, Nr. 13,<br>14. Januar 1987<br>THE PATENT OFFICE JAPANESE<br>GOVERNMENT<br>Seite 41 C 397<br>  * Kokai-Nr. 61-188 433<br>    (ASHAHI CHEM CO LTD) *<br>-- | 1,4,5,<br>6 | |
| A | DE - A - 1 544 904<br>(FARBENFABRIKEN BAYER)<br>  * Ansprüche *<br>---- | 1,4 | |

| | RECHERCHIERTE SACHGEBIETE (Int CI⁵) |
|---|---|
| | C 08 G 69/00<br>C 08 L 77/00 |

Der vorliegende Recherchenbericht wurde für alle Patentansprüche erstellt.

| Recherchenort | Abschlußdatum der Recherche | Prüfer |
|---|---|---|
| WIEN | 12-12-1991 | SEIRAFI |